# NEUE EUROPÄISCHE PATENTSCHRIFT

(11) **EP 0 246 241 B2**
(45) Veröffentlichungstag und Bekanntmachung des Hinweises auf die Entscheidung über den Einspruch: **25.08.1999**
(45) Hinweis auf die Patenterteilung: 21.08.1991
(21) Anmeldenummer: 86901809.3
(22) Anmeldetag: 19.03.1986
(51) Int. Cl.: C12H 1/02

(54) **VERFAHREN ZUM NACHKLÄREN UND STABILISIEREN VON POLYPHENOLE UND/ODER EIWEISSSTOFFE ENTHALTENDEN FLÜSSIGKEITEN, VOR ALLEM VON GETRÄNKEN UND INSBESONDERE VON BIER**
PROCESS FOR THE SECONDARY PURIFICATION AND STABILIZATION OF LIQUIDS CONTAINING POLYPHENOLS AND/OR PROTEINS, PARTICULARLY BEVERAGES AND MORE ESPECIALLY BEER
PROCEDE DE CLARIFICATION FINALE ET DE STABILISATION DE LIQUIDES CONTENANT DES POLYPHENOLS ET/OU DES PROTEINES, DE BOISSONS ET PLUS PARTICULIEREMENT DE LA BIERE

(30) Priorität: 19.03.1985 DE 3509892
(43) Veröffentlichungstag der Anmeldung: 25.11.1987
(73) Patentinhaber: HUMS, Norbert, D-84036 Landshut (DE); Schafft, Helmut, D-73563 Mögglingen (DE)
(72) Erfinder: HUMS, Norbert, D-84036 Landshut (DE); Schafft, Helmut, D-73563 Mögglingen (DE)
(74) Vertreter: Petra, Elke, Dipl.-Ing.
(86) Internationale Anmeldenummer: DE8600117
(87) Internationale Veröffentlichungsnummer: WO8605511

(56) Entgegenhaltungen:
- DE-A- 1 517 874
- DE-A- 1 907 610
- DE-A- 2 648 978
- DE-A- 2 915 677
- US-A- 3 773 222
- Brauerei-rundschau, 91, 185-190 (1980)
- Brauerei-Rundschau, 90, 205-215 (1979)
- Brauerai-Rundschau, 91, 3-10 (1980)
- Brauerei-Rundschau, 93, 229-234 (1982)
- Brauerei-Rundschau, 90, 55-59 (2979)
- Deut. Brau- und Malzmeister Bund, 237-241 (1983)
- Abriss der Bierbrauerei, S. 268-271
- S. 324-327, F. Henke Verlag (1980)
- Brauindustrie, Heft 4 (1979)
- Monatsschrift für Brauerei, 34, 83-85 (1981)
- Produkbeschreibung "Stabiquick Sedi", 1978
- Produktbeschreibung Polyclar AT, 1974
- Extrakt aus Dialog Data Base "Food and Science Technology (1985)
- Techn. Anleit. der Fa Hunter Breweries (1975)
- Tech. Broschüre der Fa Manville Products (1982)
- Brewing & Distilling, 9, 47-56 (1979)
- Brauwelt, 22, 879-884 (1974)
- Brauwelt, 35, 1680-1689 (1989)
- Brauereipraxis - Verfahrenstechnik "Moderne Filtrations-und Stabilisierverfahren", H. Schafft, Monatsschrift f. Brauerei, 29.9.78

## Beschreibung

Die Erfindung bezieht sich auf ein Verfahren zum Nachklären und Stabilisieren von Polyphenole und/oder Eiweißstoffe enthaltenden Flüssigkeiten, vor allem von Getränken und insbesondere von Bier.

Das Zentrifugieren von Flüssigkeiten, insbesondere von Getränken ist bekannt und wird im großen Umfang durchgeführt, um die während des Prozesses unlöslich gewordenen Bestandteile aus der Flüssigkeit abzutrennen. Diese Art der Fest-Flüssig-Trennung ist jedoch nur dann anwendbar, wenn der Dichteunterschied zwischen Flüssigkeit und Feststoff genügend groß ist und der abzutrennende Stoff vom Gefüge her so stabil ist, daß er durch die beim Zentrifugieren auftretenden hohen Scherkräfte nicht zerfällt, also z.B. Teilchen mit kolloiden Strukturen entstehen.

Die beim Bier als Polyphenol-Eiweißstoff-Agglomerate vorliegenden Trubstoffe haben jedoch die Eigenschaft, beim Zentrifugieren leicht zu Teilchen mit kolloider Struktur auseinanderzufallen, so daß sie nur in ungenügendem Maß durch Zentrifugieren entfernt werden können. Bei der Lagerung des Biers nach dem Zentrifugieren bilden sich diese zerfallenen Agglomerate wieder zurück und trüben das Bier erneut ein.

Da sie eine sehr wirtschaftliche Klärung ermöglichen würde, ist die Verwendung einer Zentrifuge zur Bierklärung zwar erprobt worden, sie hat sich aus den genannten Gründen jedoch in der Praxis nie durchsetzen können.

Eine andere Art der Vorklärung des Bieres, die in der Regel durchgeführt wird, besteht darin, das trübe, abfüllfertige Bier mit Filterhilfsmitteln, wie Kieselgur, Perliten, Cellulose und dergleichen kontinuierlich zu versetzen und die Filterhilfsmittel in einem Filtriergerät, in dem sie einen entsprechenden Kuchen aufbauen, abzutrennen. Nachteilig dabei ist, daß die Filterhilfsmittel nicht regeneriert werden können, als Abfall anfallen und Deponien in hohem Maße belasten. Nicht unwesentlich ist ferner, daß verschiedene Kieselgursorten hohe Anteile an Christobalit enthalten, welches gesundheitsschädlich ist.

Kieselgurfilter (Anschwemmfilter) benötigen also für ihre Funktion Wegwerf-Filterhilfsmittel. Sie haben einen relativ hohen Wasserbedarf, belasten zusätzlich das Abwasser durch Bier-Wasservermischungen und Kieselgurreste. Die verbrauchten Kieselgurschlämme stellen durch Geruchsbelästigung bei Transport und Ablagerung auf den Deponien ein weiteres Problem dar. Man ist daher schon seit Jahren bestrebt, eine Lösung zu finden, um von der Kieselgurfiltration möglichst wegzukommen. All bisherigen Bemühungen blieben jedoch ohne Erfolg.

Weiterhin ist es bekannt, nach dem Vorklären eine Stabilisierung des Bieres durchzuführen, indem Polyphenole adsorbierende Stabilisierungsmittel, wie Polyvinylpolypyrrolidon (PVPP) z.B. "Polyclar AT" (vgl. DE-OS 15 17 874) in Kombination mit Eiweißstoffe adsorbierenden Stabilisierungsmitteln, wie Hydrogel, zugegeben werden. Insbesondere das kostenaufwendige PVPP kann dabei regeneriert werden, indem temperierte Laugen zugegeben werden, die sowohl Hydrogele als auchdie adsorbierten Eiweißstoffe und Polyphenole lösen, die dadurch selektiv entfernt werden können (DE-OS 26 48 978, H. Schafft, in "Brauindustrie", Heft 4, 1979, Dr. Hums "Monatsschrift für Brauerei", Nr. 34, S. 83-85, 1981). Ferner ist es üblich (vgl. z.B. DE-OS 19 07 610) Filterhilfsmittel und Stabilisierungsmittel gemeinsam im Wegwerfverfahren zu verwenden.

Erfindungsgemäß ist nun überraschenderweise herausgefunden worden, daß der wirtschaftliche Einsatz einer Zentrifuge für die Bierklärung dann möglich ist, wenn das mit der Zentrifuge vorgeklärte Bier anschließend mit Stabilisierungsmitteln und Filterhilfsmitteln behandelt wird.

Bei dem erfindungsgemäßen Verfahren zum kombinierten Nach-klären und Stabilisieren von Polyphenole und/oder Eiweißstoffe enthaltenden Flüssigkeiten, insbesondere Bier, Wein oder ähnlichen Getränken, im Recycling wird also die zu behandelnde Flüssigkeit zunächst mit einer Zentrifuge vorgeklärt. Das mit einem Gemisch aus Polyphenole und Eiweißstoffe adsorbierenden Stabilisierungsmitteln und Feinsttrubstoffe retendierenden Filterhilfsmitteln vermischte Zentrifugat wird anschließend als Suspension in eine für die Retention von Feststoffen geeignete Vorrichtung übergeführt. Der sich in der Feststoffretentionsvorrichtung aufbauende Feststoffkuchen wird nach Beendigung der Behandlung der Flüssigkeit regeneriert, um die Filterhilfsmittel und das regenerierbare Stabilisierungsmittel zurückzugewinnen. Diese werden dann zur erneuten Flüssigkeitsbehandlung eingesetzt.

Das erfindungsgemäße Verfahren erlaubt damit erstmalig in der Praxis den vollwertigen Einsatz einer Zentrifuge anstelle einer für die Bierklärung üblichen Filtriereinrichtung, da die durch Zentrifugieren nicht trennbaren Trubstoffe je nach Teilchengröße in der Feststoffretentionsvorrichtung entweder mechanisch oder adsorptiv zurückgehalten werden.

Mit dem erfindungsgemäßen Verfahren ist es also möglich, anstelle der abwasser- und deponiebelastenden Kieselgurfiltration eine weitgehend verlustfrei arbeitende Separation der Biere in wirtschaftlicher und qualitätsgerechter Weise durchzuführen.

Bei der Umstellung einer herkömmlichen Klärkette auf das erfindungsgemäße Verfahren wird zum einen eine Zentrifuge und zum anderen eine Stabilisier- und Regenerier-Anlage benötigt. Die letztere Anlage ist in den meisten Brauereien jedoch schon vorhanden. Unter Umständen kann auch eine vorhandene Kieselgurfiltriervorrichtung (Horizontal-Kesselfilter) in eine solche Stabilisier- und Regenerieranlage umgebaut werden. Wesentlich bei dem erfindungsgemäßen Verfahren ist, daß der überwiegende und vor allem kostenaufwendigere Anteil der Stabilisierungsmittel, wie Polyvinylpolypryrrolidon (PVPP) und die Filterhilfsmittel regeneriert und unbegrenzt wiederverwendet werden können. Die zweite Komponente des Stabilisierungsmittels, nämlich das Kieselgel ist zum einen wesentlich kostengünstiger und kann zum anderen viel sparsamer eingesetzt werden, als bei den herkömmlichen Verfahren, weil es dem mit der Zentrifuge bereits vorgeklärten Bier zugesetzt wird. Vor allem aber ist die Wirkung des Kieselgels in Verbindung mit PVPP zur Beseitigung der Eiweißstoffe ungleich grösser, als wenn es ohne PVPP zur Beseitigung von Eiweißstoffen eingesetzt wird. D.h. der Verbrauch an Kieselgel geht gegenüber den bekannten Verfahren bis zu 70% und mehr zurück.

Die größten Einsparungen des erfindungsgemäßen Verfahrens resultieren aber aus dem Ersatz der Kieselgurfiltration durch die Zentrifuge. Die Zentrifuge ist namlich ein nahezu verlustfrei arbeitendes Trenn- und Klärgerät.

Das Problem bei der Klärung von Bieren mit einer Zentrifuge bestand bisher darin, daß man sich mit einem weitgespannten Kolloidbereich auseinanderzusetzen hatte, der von Partikelgrößen von mehr als 1 µm bis zu echten Lösungen (ca. 10⁻³ µm) reichte. Wird der Unterschied zwischen der Dichte der Lösung und der Feststoffteilchen sehr klein oder gleich, dann ist an sich mit einer Zentrifuge eine Trennung kaum mehr oder überhaupt nicht möglich.

Dieses Problem der Zentrifuge stand bisher dem Ersatz der Kieselgurfiltration entgegen, zumal gerade dieser nicht trennbare Kolloidbereich für die chemisch-physikalische oder kolloidale Stabilität und für die erforderliche Glanzfeinheit des Bieres entscheidend ist. Mit Hilfe des erfindungsgemäßen Verfahrens wird also dieser Kolloidbereich klärmäßig einwandfrei mit erfaßt.

Durch den Wegfall der Kieselgurfiltration beim erfindungsgemäßen Verfahren werden im übrigen auch ganz erhebliche Mengen an Spülwässern und Bier eingespart. Bei der Kieselgurfiltration treten nämlich sogenannte Übergangsverluste (Bier-Wasser-Gemische) auf. Weiterhin ist gegenüber einer Kieselgurfilteranlage die erfindungsgemäß verwendete Zentrifuge bedienungsfreundlicher und betriebssicherer.

Die erfindungsgemäß eingesetzte Zentrifuge ist vorzugsweise mit einer Steuerung für die automatische Austragung der Trübungsstoffe ausgerüstet. Auch kann sie für einen zweiten Einsatzbereich in der Brauerie z.B. nachts für eine Zwischenklärung vom Lager- zum Reifetank eingesetzt werden. Im Verbund in einer Klärkette bedarf die Automation der Zentrifuge nur noch der Ansteuerung des Antriebs und zweier Stellglieder (Zu- und Ablauf).

Im übrigen sind die aus der Zentrifuge ausgetragenen Trübungsstoffe ein wertvolles und vitaminreiches Futtermittel, da sie sich überwiegend aus Hefen und Eiweißen zusammensetzen. Die ausgetragenen Trübstoffe können in einem Sammelbehälter aufgefangen werden. Sie sind pumpbar und damit leicht zu transportieren.

Bei dem Verfahren werden als Filterhilfsmittel Cellulose- oder Kunststoffasern bzw. Cellulose- oder Kunststoffgranulate verwendet. Auch eine Mischung aus solchen Fasern bzw. Granulaten ist möglich. Bei Kunststoffasern bestehen diese vorzugsweise aus Polyamiden, halogeniertem Polyethylen und/oder Polypropylen, insbesondere fluoriertem Polyethylen wie fluorethylen. Die Fasern, insbesondere die Cellulosefasern haben dabei Faserlängen zwischen 1 und 5000 µm und eine Faserdicke von 17 bis 40 µm. Vorzugswerte für die Länge sind 10 bis 200 µm, für die Dicke etwa 20 µm. Die Cellulosefasern bestehen hierbei bevorzugt aus hochreiner Alpha-Cellulose.

Neben dem oben erwähnten PVPP zur Adsorption von Polyphenolen wird zur Adsorption bzw. Ausfällung von Eiweißstoffen als Stabilisierungsmittel Kieselgel, Kieselsol, Gelatine oder Bentonit verwendet. Eine bevorzugte Mischung der Stabilisierungs- und Filterhilfsmittel ist in den Ansprüchen 7 und 8 angegeben, demnach eine Mischung aus PVPP, Kieselgel, Cellulose und Kunststoffasern. Diese Mischung wird bevorzugt trocken homogenisiert, so daß bei der Anwendung Mischfehler vermieden werden.

Die oben erwähnte Regenerierung der Stabilisierungs- und Filterhilfsmittel kann auch unter Wärmeeinwirkung erfolgen, z.B. indem als alkalische Flüssigkeit eine 0,3 bis 5 Gew.-%ige, vorzugsweise 1 bis 2 Gew.-%ige wässrige Natriumhydroxid- und/oder Soda-Lösung bei einer Temperatur bis 90°C, vorzugsweise 40 bis 70 °C, verwendet wird.

Weitere Ausgestaltungen der Erfindung gehen aus den Unteransprüchen hervor.

Nachstehend ist die Erfindung anhand der beigefügten Zeichnung näher erläutert. Darin zeigen:
- Figur 1: schematisch eine Ausführungsform einer Anlage zur Durchführung des erfindungsgemäßen Verfahrens zum Nachklären und Stabilisieren von Bier;
- Figur 2: schematisch eine Ausführungsform des Puffertanks der Anlage; und
- Figur 3: eine Ausführungsform der Flüssigkeitsmischvorrichtung der Anlage.

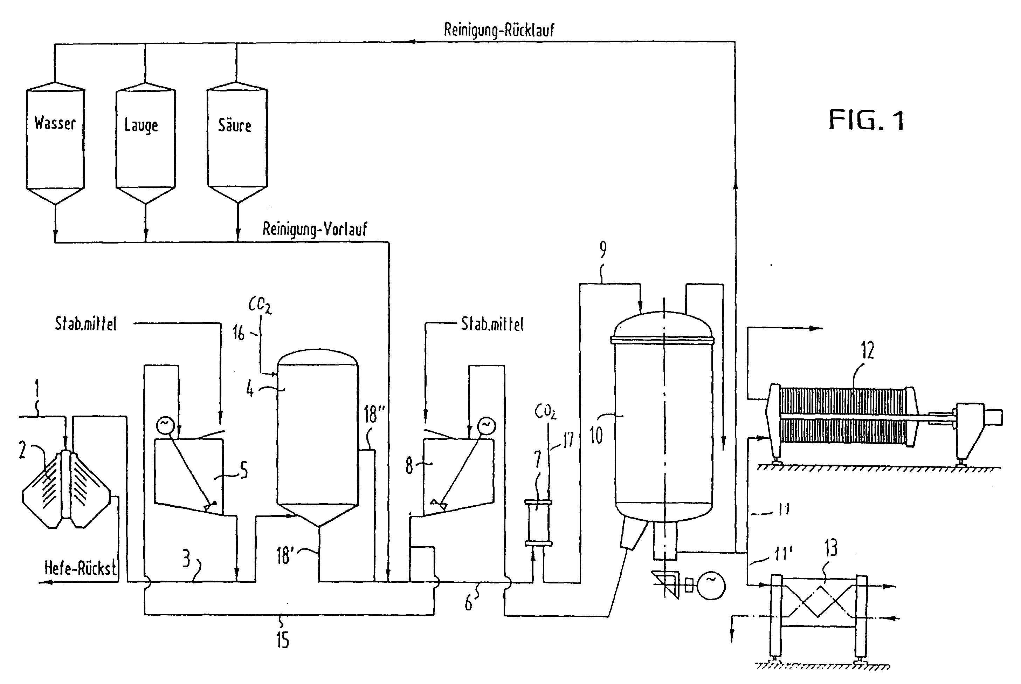

Gemäß Figur 1 wird das nachzuklärende und zu stabilisierende Bier über den Zulauf 1 einer Zentrifuge 2 zugeführt, die intermittierend angehalten wird, um den Rückstand (Trübungsstoffe) zu entfernen.

Das Zentrifugat fließt von der Zentrifuge 2 über eine Leitung 3 zu einem Puffergefäß 4. Über eine erste Dosiervorrichtung 5 wird der Leitung 3 zwischen Zentrifuge 2 und Puffertank 4 Kieselgel als erstes Stabilisierungsmittel zugeführt, das zur Adsorption der Eiweißstoffe dient.

Von dem Puffertank 4 fließt das mit Kieselgel versetzte Zentrifugat über eine Leitung 6 zu einer Flüssigkeitsmischvorrichtung 7. Zwischen dem Puffertank 4 und der Flüssigkeitsmischvorrichtung 7 wird dem Bier aus einer zweiten Dosiervorrichtung 8 ein Gemisch aus Filterhilfsmitteln (z.B. Cellulose und Kunststoffasern) und PVPP als Polyphenol adsorbierendem Stabilisierungsmittel zur kombinierten Filtration und chemischphysikalischen Stabilisierung zugeführt. DAs über der Flüssigkeit stehende Volumen der Flüssigkeitsmischvorrichtung 7 steht vorzugsweise zur Pufferung von Druckstößen der Dosierpumpe der Dosiervorrichtung 8 unter dem Druck eines inerten Gases, vorzugsweise Kohlendioxid.

Von der Flüssigkeitsmischvorrichtung 7 wird das Bier über eine Leitung 9 einer Anschwemmfiltriervorrichtung 10 zugeführt. Von der Anschwemmfiltriervorrichtung 10 geht dann das Bier über den Ablauf 11 oder 11' zur biologischen Nachbehandlung mittels einer Entkeimungsfiltriervorrichtung 12 bzw. einer Pasteurisiervorrichtung 13. Die Filterhilfsstoffe und die Stabilisierungsmittel mit den daran haftenden kolloidalen und adsorbierten Polyphenolen und Eiweißstoffen werden hingegen von der Anschwemmfiltriervorrichtung 10 zurückgehalten. Um den schnellen ungestörten Aufbau eines Filterkuchens zu ermöglichen, soll dabei das mit den Stabilisierungsmitteln und Filterhilfsmitteln versetzte Bier in der Anschwemmfiltriervorrichtung 10 in eine laminare Strömung übergeführt werden.

Zur Regenerierung der Filterhilfsmittel und der regenerierbaren Stabilisierungsmittel, wie dem PVPP, wird der Anschwemmfiltriervorrichtung 10 über eine nicht dargestellte Leitung eine 1 bis 2 Gew.-%ige wässrige NaOH-Lösung mit einer Temperatur von 50 bis 60°C zugeführt. Dadurch gehen die Eiweißstoffe und Polyphenole des Filterkuchens in Lösung. Sie werden über eine Leitung abgelassen. Die Entkeimungsfiltriervorrichtung 12 bzw. die Pasteurisiervorrichtung 13 werden während der Regenerierung selbstverständlich von der Anschwemmfiltriervorrichtung 10 getrennt.

Desgleichen geht beim Regenerieren das Kieselgel in Lösung und damit ebenfalls ab. Die in der Anschwemmfiltriervorrichtung 10 zurückgehaltenen Filterhilfsmittel und das PVPP bleiben bei der NaOH-Behandlung jedoch in der Anschwemmfiltriervorrichtung 10 zurück. Sie werden mit Wasser gewaschen und dann über eine in Figur 1 nicht dargestellte Leitung der zweiten Dosiervorrichtung 8 wieder zugeführt. Weiterhin kann über die in Figur 1 dargestellte Leitung 15 ein Teilstrom von der Vorrichtung 8 der ersten Dosiervorrichtung 5 zugeführt werden. Der Puffertank 4 und die Flüssigkeitsmischvorrichtung 7 sind ferner über eine Leitung 16 bzw. 17 mit Kohlendioxid vorgespannt.

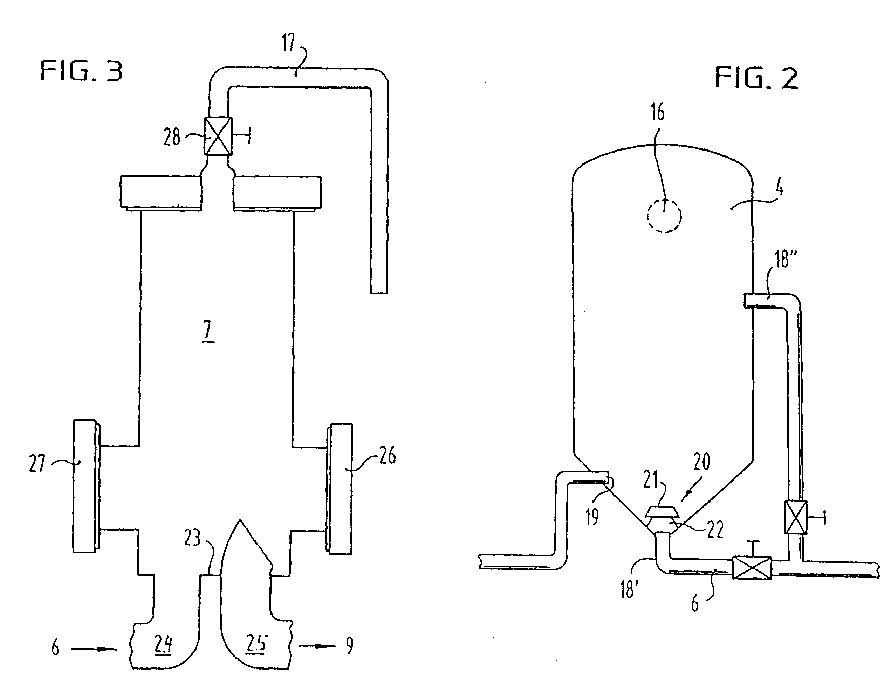

Der Puffertank 4 wird, wie insbesondere aus Figur 2 ersichtlich ist, durcheinen zylindrischen Druckbehälter gebildet, dessen unterer Abschnitt sich nach unten konisch zu einer Auslauföffnung 18' verjüngt, an der die Leitung 6 angeschlossen ist. Im Bereich des konischen, unteren Abschnitts des Druckbehälters ist eine an die Leitung 3 angeschlossene tangential gerichtete Einlauföffnung 19 vorgesehen, derart, daß in diesem Abschnitt eine zyklonartige Strömung entsteht. Auf diese Weise wird das über die Dosiervorrichtung 5 zugeführte Stabilisierungsmittel bzw. der über die Dosiervorrichtung 8 zugeführte Stabilisierungsmittel und Filterhilfsmittel enthaltende Teilstrom der Leitung 15 mit dem Zentrifugat im Puffertank 4 innig verwirbelt und über die darüber angesetzte Auslauföffnung 18" weitergeführt. Die Flüssigkeitsmenge im Puffertank 4 wird dabei so angesteuert, daß die eingesetzten Stabilisierungsmittel und/oder Filterhilfsmittel hinreichend mit dem in dem Bier enthaltenen Eiweißstoffen, Polyphenolen, Eiweiß-Polyphenol-Verbindungen und anderen zu Agglomeraten reagieren und diese weitestgehend adsorbieren können. Die Füllhöhe im Puffertank 4 wird im Minimum so angesteuert, daß die kurzzeitige Austragszyklen der Zentrifuge 2 abgefangen werden und ein kontinuierlicher Durchfluß erhalten bleibt. Das Restvolumen im Puffertank 4 wird über die Leitung 16 mit CO₂ im Hinblick auf die im Bier enthaltende Kohlensäure unter Spanndruck gehalten. Über die untere Auslauföffnung 18' ist im Abstand eine Vorrichtung 20 zur Verhinderung des Einschnüffelns von Gas in die Auslauföffnung 18' beim Entleeren des Puffertanks 4 vorgesehen. Diese Vorrichtung kann aus einer kegelstumpfförmigen, mit ihrer Öffnung nach unten gerichteten Haube 21 gebildet sein, die über Abstandshalter 22 am Druckbehälter befestigt ist.

Die Flüssigkeitsmischvorrichtung 7 wird, wie insbesondere aus Figur 3 ersichtlich ist, durch ein zylindrisches Gefäß gebildet, in dessen unteren Boden 23 ein Einlaufstutzen 24 und ein Auslaufstutzen 25 münden, an denen die Leitung 6 bzw. 9 angeschlossen ist.

Ferner sind zwei Schaugläser 26 und 27 in der zylindrischen Umfangswand der Flüssigkeitsvorrichtung 7 vorgesehen. Der Einlaufstutzen 24 ist dabei zu dem Schauglas 26 hin gekrümmt. Dem Schauglas 26 liegt in gleicher Höhe das Schauglas 27 gegenüber. Das Schauglas 26 und das Schauglas 27 können auch in ein Trübungsmeßgerät integriert sein. Durch das Schauglas 26 bzw. ein derartiges Trübungs meßgerät ist eine Kontrolle der Durchmischung in der Flüssigkeitsmischvorrichtung 7 gewährleistet. Weiterhin kann das Trübungsmeßgerät so ausgebildet werden, daß die Dosiervorrichtung 5 und/oder die Dosiervorrichtung 8 automatisch gesteuert werden.

Die Flüssigkeitsmischvorrichtung 7 stellt also zugleich ein Reaktor- und Puffergefäß dar. Dabei wird der mit einem Gemisch aus Stabilisierungsmitteln und Filterhilfsmitteln versetzte Bierstrom in der Flüssigkeitsmischvorrichtung 7 derart verwirbelt, daß die Reaktion der Stabilisierungsmittel und der Filterhilfsmittel mit den trübungsrelevanten Stoffen und den Feintrubstoffen um ein Mehrfaches beschleunigt wird. Die obere Hälfte der Flüssigkeitsmischvorrichtung 7 ist mit CO₂ vorgespannt, das über die mit einem Absperrorgan 28 versehene Leitung 17 zugeführt wird, die am Deckel der Vorrichtung 7 angeschlossen ist. Durch die CO₂-Vorspannung werden Druckstöße beim Eindosieren abgepuffet

Das Gemisch aus Stabilisierungsmitteln und Filterhilfsmitteln wird zweckmäßigerweise vor der Anwendung festgelegt, worauf diese Stoffe im trokkenen Zustand homogenisierten werden. Zweckmäßigerweise werden die so homogenisierten Gemische den Betrieben geliefert, um Mischfehler dort auszuschließen. Das angelieferte Gemisch wird erst beim Gebrauch in Wasser oder in der Flüssigkeit im Gewichtsverhältnis von 1:5 bis 1:40, vorzugsweise 1:10 bis 1:30 suspendiert.

Ein geeignetes Gemisch setzt sich dabei zusammen aus höchstens 50% Gewichtsanteilen PVPP, höchstens 50% Gewichtsanteilten Kieselgel, höchstens 75 % Gewichtsanteil Cellulose und höchstens 75 % Gewichtsanteil Kunststofffasern. Bevorzugt betragen die Gewichtsanteile für PVPP zwischen 20 und 40 %, für Kieselgel zwischen 10 bis 30 %, für Cellulose zwischen 40 und 60 %, für die Kunststofffasern 5 bis 25 %, insbesondere 2 bis 10 %. Es hat sich herausgestellt, daß ein solches Gemisch unabhängig von einer vorhergehenden Zentrifugierung auch in Zusammenhang mit anderen Verfahren zum Nachklären von Getränken und insbesondere Bier benutzt werden kann.

## Patentansprüche

1. Verfahren zum Klären und Stabilisieren von Polyphenole und Eiweißstoffe enthaltenden Flüssigkeiten und Getränken, insbesondere von Bier, wobei die Flüssigkeit durch Zentrifugieren vorgeklärt und anschließend mit Polyphenole und Eiweißstoffe adsorbierenden Stabilisierungsmitteln vermischt wird, die zumindest teilweise regeneriert und dem Prozeß im Recycling wieder zugeführt werden, gekennzeichnet durch folgende Merkmale:
a) der vorgeklärten Flüssigkeit werden gemeinsam mit den Stabilisierungsmitteln Filterhilfsmittel zugemischt;
b) als Stabilisierungsmittel werden zur Adsorption von Polyphenolen Polyvinylpolypyrrolidon (PVPP) und zur Adsorption bzw. Ausfällung von Eiweißstoffen Kieselgel, Kieselsol, Gelatine oder Bentonit verwendet;
c) als Filterhilfsmittel wird ein Faser- und Granulatgemisch aus Cellulose und/oder Kunststoff verwendet;
d) die derart behandelte Flüssigkeit wird in eine Retentionsvorrichtung überführt, wo sich Stabilisierungsmittel und Filterhilfsmittel unter Bildung eines Feststoffkuchens absetzen und die Flüssigkeit gleichzeitig stabilisiert und nachgeklärt wird;
e) die Bestandteile des Feststoffkuchens, nämlich Stabilisierungsmittel und Filterhilfsmittel, werden regeneriert und im Recycling dem Prozeß wieder zugeführt.

2. Verfahren nach Anspruch 1, dadurch gekennzeichnet, daß die mit der Zentrifuge vorgeklärte Flüssigkeit unter Turbulenz mit einem Gemisch aus Stabilisierungsmitteln und Filterhilfsmitteln vermischt wird und vor dem Aufbau des Feststoffkuchens in der Retentionsvorrichtung in eine laminare Strömung übergeführt wird.

3. Verfahren nach Anspruch 1, dadurch gekennzeichnet, daß als Filterhilfsmittel verwendete Kunststoffasern aus Polyamiden und gegebenenfalls halogeniertem Polyethyten und/oder aus Polypropylen, insbesondere fluoriertem Polyethlyen, wie PTFE, bestehen.

4. Verfahren nach Anspruch 1, dadurch gekennzeichnet, daß als Filterhilfsmittel verwendete Cellulosefasern eine Faserlänge von 1 bis 5000 µm, vorzugsweise 10 bis 200 µm und eine Faserdicke von 17 bis 40 µm, vorzugsweise etwa 20 µm aufweisen.

5. Verfahren nach Anspruch 4 , dadurch gekennzeichnet, daß die Cellulosefasern aus hochreiner Alpha-Cellulose bestehen.

6. Verfahren nach einem der vorstehenden Ansprüche, dadurch gekennzeichnet, daß der Flüssigkeit folgende Stabilisierungs- und Filterhilfsmittel in folgenden Gewichtsanteilen zugesetzt werden: PVPP höchstens 50 %, Kieselgel höchstens 50 %, vorzugsweise 10 bis 30 %, Cellulose höchstens 75 %, vorzugsweise 40 bis 60 %, Kunststoffasern höchstens 75 % vorzugsweise 5 bis 25 %.

7. Verfahren nach Anspruch 6 , dadurch gekennzeichnet, daß die Stabilisierungs- und Filterhilfsmittel in folgenden Gewichtsanteilen zugesetzt werden: PVPP 20 bis 40 %, Kieselgel 10 bis 30 %, Cellulose 40 bis 60 %, Kunststoffasern 2 bis 10 %.

8. Verfahren nach einem der vorstehenden Ansprüche, dadurch gekennzeichnet, daß das oder die Eiweißstoffe adsorbierenden Stabilisierungsmittel gesondert zudosiert werden.

9. Verfahren nach Anspruch 8, dadurch gekennzeichnet, daß das oder die Eiweißstoffe adsorbierenden Stabilisierungsmittel vor den übrigen Stabilisierungsmitteln und Filterhilfsmitteln der Flüssigkeit zugesetzt einem Puffertank zugeführt werden, der zur kontinuierlichen Verfahrensführung der intermittierend betriebenen Zentrifuge nachgeschaltet ist.

10. Verfahren nach Anspruch 9, dadurch gekennzeichnet, daß dem Puffertank ein Teilstrom und/oder Gesamtstrom der suspendierten Stabilisierungsmittel und Filterhilfsmittel zugeführt wird.

11. Verfahren nach einem der vorstehenden Ansprüche, dadurch gekennzeichnet, daß zum Regenerieren des oder der Polyphenole und Eiweißstoffe adsorbierenden Stabilisierungsmittel und der Filterhilfsmittel der Feststoffkuchen in der Retentionsvorrichtung mit einer alkalischen Flüssigkeit gegebenenfalls unter Wärmeeinwirkung behandelt und darauf das oder die Stabilisierungsmittel und die Filterhilfsmittel abgetrennt und mit Wasser gewaschen werden.

12. Verfahren nach Anspruch 11, dadurch gekennzeichnet, daß als alkalische Flüssigkeit eine 0,3 bis 5 Gew.%-ige, vorzugsweise 1 bis 2 Gew.-%-lG wäßrige Natriumhydroxid- und/oder Soda-Lösung bei einer Temperatur bis 90°C, vorzugsweise 40 bis 70°C, verwendet wird.

13. Verfahren nach einem der vorstehenden Ansprüche, dadurch gekennzeichnet, daß die Zusammensetzung der regenerierbaren Stabilisierung- und Filterhilfsmittelmischung vor der Anwendung festgelegt und diese im trockenen Zustand homogenisiert wird.

14. Verfahren nach Anspruch 13, dadurch gekennzeichnet, daß die Stabilisierung- und Filterhilfsmittelmischung in Wasser oder in der Flüssigkeit im Gewichtsverhältnis von 1:5 bis 1:40, vorzugsweise 1:10 bis 1:30 suspendiert wird.

15. Anlage zur Durchführung des Verfahrens nach einem der Ansprüche 1 bis 14, gekennzeichnet durch eine Klärkette folgender Reihenfolge: eine Zentrifuge (2), eine erste Dosiervorrichtung (5) zur Zufuhr eines oder mehrerer Stabilisierungsmittel, insbesondere Kieselgel, einem Puffertank (4), einer zweiten Dosiervorrichtung (8) zur Zufuhr des oder der regenerierbaren Stabilisierungsmittel und der Filterhilfsmittel, einer Flüssigkeitsmischvorrichtung (7), eine Feststoffretentionsvorrichtung und eine Entkeimungsvorrichtung.

16. Anlage nach Anspruch 15, dadurch gekennzeichnet, daß die Feststoffretenionsvorrichtung durch eine Anschwemmfiltriervorrichtung (10) gebildet wird.

17. Anlage nach Anspruch 15 oder 16, dadurch gekennzeichnet, daß der Puffertank (4) durch einen zylindrischen sich nach unten zu einer ersten Auslauföffnung (18') konisch verjüngenden Druckbehälter gebildet wird, der eine tangential gerichtete Einlauföffnung (19) und eine darüber angeordnete zweite Auslauföffnung (18") aufweist.

18. Anlage nach Anspruch 17, dadurch gekennzeichnet, daß das über der Flüssigkeit befindliche Volumen im Puffertank (4) unter dem Druck eines inerten Gases, vorzugsweise Kohlendioxid steht.

19. Anlage nach einem der Ansprüche 15 bis 18, dadurch gekennzeichnet, daß die Flüssigkeitsmischvorrichtung (7) durch ein Gefäß gebildet wird, das an seinem unteren Boden (23) einen Flüssigkeitseinlaufstutzen (24) und einen Flüssigkeitsauslaufstutzen (25) aufweist und dessen zylindrische Umfangswand mit zwei gegenüberliegenden Schaugläsern (26, 27) versehen ist.

20. Anlage nach Anspruch 19, dadurch gekennzeichnet, daß der Einlaufstutzen (24) auf eines der beiden Schaugläser (26, 27) gerichtet ist.

21. Anlage nach Anspruch 19 oder 20, dadurch gekennzeichnet, daß an den Schaugläsern (26, 27) eine Trübungsmeßvorrichtung angeordnet ist, welche die Gesamtdosierung überwacht und steuert.

22. Anlage nach einem der Ansprüche 19 bis 21, dadurch gekennzeichnet, daß das über der Flüssigkeit stehende Volumen der Flüssigkeitsmischvorrichtung (7) zur Pufferung von Druckstößen der Dosierpumpe der Dosiereinrichtung (8) unter dem Druck eines inerten Gases vorzugsweise Kohlendioxid, steht.

23. Mischung zur Durchführung des Verfahrens nach einem der Ansprüche 1 bis 14, zum Klären bzw. Nachklären und Stabilisieren von Flüssigkeit, vorzugsweise Bier mit folgender Zusammensetzung: PVPP höchstens 50 %, Kieselgel höchstens 50 %, vorzugsweise 10 bis 30 %, Cellulose höchstens 75 %, vorzugsweise 40 bis 60 %, Kunststoffasern höchstens 75 %, vorzugsweise 5 bis 25 %.

24. Mischung nach Anspruch 23, dadurch gekennzeichnet, daß die Stabilisierung- und Filterhilfsmittel folgende Gewichtsanteile aufweisen: PVPP 20 bis 40 %, Kieselgel 10 bis 30 %, Cellulose 40 bis 60 %, Kunststoffasern 2 bis 10 %.

## Claims

1. Process for clarifying and stabilising liquids and beverages, above all beer, containing polyphenols and proteins, the liquid being preclarified by centrifuging and then being mixed with stabilisers which adsorb polyphenols and proteins and which are at least partially regenerated and returned to the process by recycling, characterised by the following features:
a) filter aids are admixed together with the stabilisers to the preclarified liquids;
b) polyvinylpolypyrrolidone (PVPP) is used as the stabiliser for the adsorption of polyphenols and silica gel, silica sol, gelatine or bentonite are used for the adsorption or precipitation of proteins;
c) a mixture of fibres and granules of cellulose and/or plastic is used as the filter aid;
d) the liquid treated in this way is transferred to a retention device, where the stabiliser and filter aid settle, forming a solid cake, and the liquid is at the same time stabilised and finally clarified;
e) the constituents of the solid cake, namely stabiliser and filter aid, are regenerated and returned to the process by recycling.

2. Process according to Claim 1, characterised in that the liquid preclarified by means of the centrifuge is mixed under turbulent conditions with a mixture of stabilisers and filter aids and converted to laminar flow before the solid cake is built up in the retention device.

3. Process according to Claim 1, characterised in that plastic fibres used as filter aids consist of polyamides and optionally halogenated polyethylene and/or of polypropylene, above all fluorinated polyethylene, such as PTFE.

4. Process according to Claim 1, characterised in that cellulose fibres used as filter aids have a fibre length from 1 to 5000 lm, preferably 10 to 200 lm, and a fibre thickness from 17 to 40 lm, preferably about 20 lm.

5. Process according to Claim 4, characterised in that the cellulose fibres consist of highly pure alpha-cellulose.

6. Process according to one of the preceding claims, characterised in that the following stabilisers and filter aids are added to the liquid in the following proportions by weight:
PVPP at most 50%, silica gel at most 50%, preferably 10 to 30%, cellulose at most 75%, preferably 40 to 60%, plastic fibres at most 75%, preferably 5 to 25%.

7. Process according to Claim 6, characterised in that the stabilisers and filter aids are added in the following proportions by weight: PVPP 20 to 40%, silica gel 10 to 30%, cellulose 40 to 60%, plastic fibres 2 to 10%.

8. Process according to one of the preceding claims, characterised in that the stabiliser or stabilisers adsorbing the proteins are added separately.

9. Process according to Claim 8, characterised in that the protein-adsorbing stabiliser or stabilisers added to the liquid before the remaining stabilisers and filter aids are passed to a buffer tank which, for a continuous procedure, is provided downstream of the centrifuge operated intermittently.

10. Process according to Claim 9, characterised in that a part stream and/or total stream of the suspended stabilisers and filter aids is passed to the buffer tank.

11. Process according to one of the preceding claims, characterised in that, for the regeneration of the stabiliser or stabilisers adsorbing the polyphenols and proteins, and of the filter aids, the solid cake is treated in the retention device with an alkaline liquid, if necessary under the action of heat, and the stabiliser or stabilisers and the filter aids are then separated off and washed with water.

12. Process according to Claim 11, characterised in that a 0.3 to 5% by weight, preferably 1 to 2% by weight, aqueous sodium hydroxide solution and/or soda solution is used as the alkaline liquid at a temperature of up to 90°C, preferably 40 to 70°C.

13. Process according to one of the preceding claims, characterised in that the composition of-the regenerable mixture of stabilisers and filter aids is fixed before use and this mixture is homogenised in the dry state.

14. Process according to Claim 13, characterised in that the mixture of stabilisers and filter aids is suspended in water or in the liquid in a weight ratio from 1:5 to 1:40, preferably 1:10 to 1:30.

15. Equipment for carrying out the process according to one of Claims 1 to 14, characterised by a clarification chain in the following order: a centrifuge (2), a first metering device (5) for feeding one or more stabilisers, especially silica gel, a buffer tank (4), a second metering device (8) for feeding the regenerable stabiliser or stabilisers and the filter aids, a liquid mixing device (7), a solids retention device and a sterilisation device.

16. Equipment according to Claim 15, characterised in that the solids retention device is formed by a powder filter device (10).

17. Equipment according to Claim 15 or 16, characterised in that the buffer tank (4) is formed by a cylindrical pressure vessel which conically tapers downwards into a first outlet orifice (18') and has a tangentially directed inlet orifice (19) and a second outlet orifice (18") located above the latter.

18. Equipment according to Claim 17, characterised in that the volume above the liquid in the buffer tank (4) is under the pressure of an inert gas, preferably carbon dioxide.

19. Equipment according to one of Claims 15 to 18, characterised in that the liquid-mixing device (7) is formed by a vessel which has a liquid inlet branch (24) and a liquid outlet branch (25) at its lower end (23) and whose cylindrical circumferential wall is provided with two sightglasses (26, 27) in opposite locations.

20. Equipment according to Claim 19, characterised in that the inlet branch (24) points to one of the two sightglasses (26, 27).

21. Equipment according to Claim 19 or 20, characterised in that a turbidity-measuring device, which monitors and controls the overall addition, is located on the sightglasses (26, 27).

22. Equipment according to one of Claims 19 to 21, characterised in that the volume above the liquid in the liquid-mixing device (7) is, for buffering pressure surges of the metering pump of the metering device (8), under the pressure of an inert gas, preferably carbon dioxide.

23. Mixture for use in the process according to one of Claims 1 to 14 for clarifying and/or finally clarifying and stabilising liquid, preferably beer, of the following composition:
PVPP at most 50%, silica gel at most 50%, preferably 10 to 30%, cellulose at most 75%, preferably 40 to 60%, plastic fibres at most 75%, preferably 5 to 25%.

24. Mixture according to Claim 23, characterised in that the stabilisers and filter aids are in the following proportions by weight:
PVPP 20 to 40%, silica gel 10 to 30%, cellulose 40 to 60%, plastic fibres 2 to 10%.

## Revendications

1. Procédé pour décanter et stabiliser des liquides et des boissons contenant des polyphénols et des protéines, notamment de la bière, dans lequel le liquide est prédécanté par centrifugation et ensuite mélangé à des agents de stabilisation adsorbeurs de polyphénols et de protéines, qui sont recyclés au moins partiellement et réinjectés dans le processus pendant leur recyclage, caractérisé en ce qu'il comprend les étapes suivantes :
a) les agents de stabilisation et des agents de filtrage sont mélangés ensemble au liquide pré-décanté ;
b) en tant qu'agent de stabilisation, du polyvinylpolypyrrolidon (PVPP) est utilisé pour l'adsorption de polyphénols, et du gel de silice, du sol de silice, de la gélatine ou de la bentonite sont utilisés pour l'adsorption et/ou la précipitation de protéines ;
c) en tant qu'agent de filtrage, un mélange de fibres et de granulés de cellulose et/ou synthétiques est utilisé ;
d) le liquide ainsi traité est acheminé vers un dispositif de rétention, où les agents de stabilisation et de filtrage forment une croûte de matériaux solides et où le liquide est en même temps stabilisé et post-décanté ;
e) les constituants de la croûte, notamment les agents de stabilisation et de filtrage, sont recyclés et réinjectés dans le processus pendant le recyclage.

2. Procédé selon la revendication 1, caractérisé en ce que le liquide prédécanté avec la centrifugeuse est mélangé en turbulence avec un mélange d'agents de stabilisation et de filtrage, et en ce que, avant la formation de la croûte, il est acheminé vers le dispositif de rétention avec un écoulement laminaire.

3. Procédé selon la revendication 1, caractérisé en ce que les fibres synthétiques utilisées en tant qu'agent de filtrage comprennent des polyamides et, selon le cas, du polyéthylène halogéné et/ou du polypropylène, notamment du polyéthylène fluoré, tel que du PTFE.

4. Procédé selon la revendication 1, caractérisé en ce que les fibres de cellulose utilisées en tant qu'agent de filtrage ont une longueur de 1 à 5000 micromètres, de préférence 10 à 200 micromètres, et une épaisseur de 17 à 40 micromètres, de préférence environ 20 micromètres.

5. Procédé selon la revendication 4, caractérisé en ce que les fibres de cellulose sont constituées de cellulose alpha à haut degré de pureté.

6. Procédé selon l'une quelconque des revendications précédentes, caractérisé en ce que le liquide est additionné d'agents de stabilisation et de filtrage selon les proportions massiques suivantes :
au plus 50 % de PVPP, au plus 50 % de gel de silice, de préférence 10 à 30 %, au plus 75 % de cellulose, de préférence 40 à 60 %, au plus 75 % de fibres synthétiques, de préférence 5 à 25 %.

7. Procédé selon la revendication 6, caractérisé en ce que les agents de stabilisation et de filtrage sont utilisés selon les proportions massiques suivantes :
20 à 40 % de PVPP, 10 à 30 % de gel de silice, 40 à 60 % de cellulose, 2 à 10 % de fibres synthétiques.

8. Procédé selon l'une quelconque des revendications précédentes, caractérisé en ce que les agents de stabilisation adsorbeurs de ou des protéines sont fournis séparément

9. Procédé selon la revendication 8, caractérisé en ce que les agents de stabilisation adsorbeurs de ou des protéines, avant l'addition des autres agents de stabilisation et de filtrage, sont fournis à un réservoir tampon qui, pour la mise en oeuvre en continu du procédé, est relié à la centrifugeuse fonctionnant par alternances.

10. Procédé selon la revendication 9, caractérisé en ce que le réservoir tampon est alimenté avec un écoulement partiel et/ou total d'agents de stabilisation et de filtrage en suspension.

11. Procédé selon l'une quelconque des revendications précédentes, caractérisé en ce que, pour leur recyclage, les agents de filtrage et le ou les agents de stabilisation adsorbeurs de polyphénols et de protéines de la croûte dans le dispositif de rétention sont traités avec un liquide alcalin, selon le cas à chaud, et en ce que le ou les agents de stabilisation et les agents de filtrage sont alors séparés et lavés avec de l'eau.

12. Procédé selon la revendication 11, caractérisé en ce que le liquide alcalin est une solution aqueuse comprenant 0,3 à 5 % en poids, de préférence 1 à 2 %, d'hydroxyde de sodium et/ou de carbonate de sodium à une température pouvant atteindre 90°C, de préférence 40 à 70°C.

13. Procédé selon l'une quelconque des revendications précédentes, caractérisé en ce que la constitution du mélange d'agents recyclables de stabilisation et de filtrage est fixée avant l'utilisation et en ce que le mélange est homogénéisé à sec.

14. Procédé selon la revendication 13, caractérisé en ce que le mélange d'agents de stabilisation et de filtrage est mis en suspension dans de l'eau ou dans un liquide selon des proportions massiques de 1/5 à 1/40, de préférence 1/10 à 1/30.

15. Installation de mise en oeuvre du procédé selon l'une quelconque des revendications 1 à 14, caractérisée en ce qu'elle comprend une chaîne de décantation comprenant les éléments suivants : une centrifugeuse (2), un premier dispositif de dosage (5) pour fournir un ou plusieurs agents de stabilisation, notamment du gel de silice, un réservoir tampon (4), un deuxième dispositif de dosage (8) pour fournir le ou les agents de stabilisation recyclables et les agents de filtrage, un dispositif de mélange de liquide (7), un dispositif de rétention d'éléments solides et un dispositif de stérilisation.

16. Installation selon la revendication 15, caractérisée en ce que le dispositif de rétention d'éléments solides est constitué d'un dispositif de filtrage à couches (10).

17. Installation selon l'une des revendications 15 ou 16, caractérisée en ce que le réservoir tampon (4) est constitué d'un accumulateur de pression cylindrique se rétrécissant coniquement à sa partie inférieure vers une ouverture de sortie (18') et en ce qu'il comprend une ouverture d'entrée tangentielle (19) et une deuxième ouverture de sortie (18") disposée au-dessus de l'ouverture d'entrée.

18. Installation selon la revendication 17, caractérisée en ce que le volume au-dessus du liquide dans le réservoir tampon (4) comprend du gaz inerte sous pression, de préférence du dioxyde de carbone.

19. Installation selon l'une quelconque des revendications 15 à 18, caractérisée en ce que le dispositif de mélange de liquides (7) est constitué d'un fût comprenant à sa partie inférieure (23) un manchon d'entrée de liquide (24) et un manchon de sortie de liquide (25) et dont la paroi cylindrique est munie de deux fenêtres d'observation face à face (26, 27).

20. Installation selon la revendication 19, caractérisée en ce que le manchon d'entrée (24) est dirigé vers l'une des fenêtres (26, 27).

21. Installation selon l'une des revendications 19 ou 20, caractérisée en ce que les fenêtres d'observation (26, 27) sont munies d'un dispositif de mesure de turbidité qui surveille et contrôle le dosage d'ensemble.

22. Installation selon l'une quelconque des revendications 19 à 21, caractérisée en ce que le volume au-dessus du liquide dans le dispositif de mélange de liquides (7) comprend un gaz inerte sous pression, de préférence du dioxyde de carbone, pour compenser les à-coups de pression de la pompe de dosage du dispositif de dosage (8).

23. Mélange destiné à être utilisé dans le procédé selon l'une quelconque des revendications 1 à 14, pour décanter ou bien post-décanter et stabiliser un liquide, tel que de la bière, ayant la constitution suivante :
au plus 50 % de polyvinylpolypyrrolidon PVPP, au plus 50 % de gel de silice, de préférence 10 à 30 %, au plus 75 % de cellulose, de préférence 40 à 60 %, au plus 75 % de fibres synthétiques, de préférence 5 à 25 %.

24. Mélange selon la revendication 23, caractérisé en ce que les agents de stabilisation et de filtrage comprennent les proportions massiques suivantes :
20 à 40 % de PVPP, 10 à 30 % de gel de silice, 40 à 60 ; de cellulose, 2 à 10 % de fibres synthétiques.
